Europäisches Patentamt

European Patent Office

Office européen des brevets

Publication number: **0 276 899**

**A1**

## EUROPEAN PATENT APPLICATION

Application number: **88300003.6**

Date of filing: **04.01.88**

Int. Cl.4: **C04B 12/04** , C04B 35/68 , F27D 1/00 , C04B 28/26 , //(C04B28/26,14:30,14:46)

Priority: **13.01.87 GB 8700700**

Date of publication of application: **03.08.88 Bulletin 88/31**

Designated Contracting States: **AT BE CH DE ES FR GB GR IT LI LU NL SE**

Applicant: **CLINOTHERM LIMITED Bretton Street Savile Town Dewsbury West Yorkshire WF12 9DB(GB)**

Inventor: **Emblem, Harold Garton 137A Hampton Road Southport Merseyside PR8 5DY(GB)** Inventor: **Hargreaves, John 18 Ridgewood Drive Cromford Matlock DE4 3RJ(GB)** Inventor: **Shelley, Standley John 76 West Park Street Dewsbury West Yorkshire WF13 4LH(GB)**

Representative: **Daley, Michael John et al F.J. CLEVELAND & COMPANY 40/43 Chancery Lane London, WC2A 1JQ(GB)**

Refractory cements.

A refractory cement particularly a cement cotaining chopped ceramic fibres and a hydrous aluminium oxide contains aqueous lithium silicate as the setting component.

EP 0 276 899 A1

## REFRACTORY CEMENTS

This invention relates to refractory cements. The word "cement" is used in the functional sense to define an initially plastic composition which on standing sets hard. The refractory cements with which the invention is concerned essentially comprise a chemically, as opposed to hydraulically, settable liquid and an aggregate of refractory particles or fibres. The composition will usually contain also a hydrous metal oxide which enhances setting, both physically and chemically, and, on firing, forms useful complex minerals with the fired gel.

Prior art cements, as set out above, are conventionally based on lower alkyl silicates, notably ethyl silicate. Thus a cement composition in accordance with the prior art could comprise ethyl silicate in alcohol solution, refractory aggregate and (optionally) a hydrous metal oxide. Preferably the ethyl silicate and alcohol are present as an acid hydrolysate of ethyl silicate. Such a composition though, effective in the functional sense, presents handling problems as the alcohol solvent is volatile to an inflammable and possibly toxic vapour. It would be preferable to work with a water-based system but up to the present time this has not been practically possible.

The gelling properties of aqueous solutions of sodium and potassium silicate are known but such solutions have very limited application as the refractory properties of the fired residue of the sodium and potassium silicate based gels are poor. Cements based on these solutions are not useful above about 600°C.

A refractory cement in accordance with the present invention is characterised by the use of an aqueous lithium silicate solution as the effective setting component. In this specification the term 'cement' is used to comprehend the cement mixed and plastic, set and set and fired.

Lithium salts are known as good fluxes, that is to say they provide active melts which tend to dissolve other components and minerals. Thus the replacement of sodium oxide by lithium oxide in glasses and glass-ceramics increases in the glasses density and surface hardness, also resistance to chemical attack. This is indicative of the good fluxing properties of the lithium silicate. One would thus have predicted that on firing a refractory system the lithium silicate based gel would have reacted with and dissolved refractory minerals thereby disturbing the stability and detrimentally affecting the properties of the fired mass.

Surprisingly this has proved not to be the case as will be described hereinafter in the specification.

Sodium silicate solutions are generally made by fusing silica sand with sodium carbonate and dissolving the resulting sodium silicate glass in water. Early investigations of the analogous reaction between lithium carbonate and silica showed that the product obtained depended on the reaction conditions, products such as $Li_4SiO_4$ : $Li_2SiO_3$ and $Li_2Si_5O_{11}$ being obtained. The product obtained when silica is fused with lithium carbonate is not completely characterised. In the system $Li_2O$ - $SiO_2$ three components are formed. These are:

$2 Li_2O . SiO_2 (Li_4 SiO_4)$

$Li_2O . SiO_2 (Li_2 SiO_3)$

$Li_2O . 2SiO_2 (Li_2 SiO_5)$

The sodium silicate glasses formed when silica is fused with sodium carbonate are water soluble, but the corresponding lithium silicate glasses are not. Lithium silicate solutions are therefore manufactured by dissolving silica in a solution of lithium hydroxide.

Lithium silicate solutions and sodium silicate solutions are therefore not interchangeable, which makes the observation that lithium silicate solutions can be successfully used to bind refractory materials, in the form of grain or ceramic fibre, unexpected.

One suitable aqueous lithium silicate solution is available commercially under the trade name of Crystal L29 lithium silicate and has the following properties.

Sp.Gr. 20°C 20°C    -1.15

Wt. ratio $SiO_2$: $Li_2O$    -11.3

Molar ratio $SiO_2$:$Li_2O$    -5.6

% $Li_2O$ w w (weight weight)    -1.55

% $SiO_2$ w w (weight weight)    -17.50

% Total solids w w (weight weight)    -19.05

The preferred cement compositions include at least one substance such as a hydrous metal oxide or a metal which reacts with the lithium silicate to enhance the setting and/or form on firing complex silicates which have special properties.

The addition of alumina is advantageous as the $Li_2O$ -$SiO_2$-$Al_2O_3$ system gives $\beta$ -eucryptite on firing. This has a uniform thermal contraction on cooling from ca 1000°C to ambient temperature, giving good resistance to thermal shock. The alumina may be as fine (micronised) alpha - alumina, or as a hydrous oxide such as gibbsite or boehmite. Hydrous silicon oxides may also be used (the silica gels of which the silica gel sold under the Registered Trade Mark GASIL is a typical example). Hydrous zirconium oxides may also be used. If desired, mixtures of more than one hydrous oxide may be used. The hydrous oxide material should preferably have a grain size finer than 100 microns. The composition may also include coarse refractory oxide grains, for instance mullite grain or alpha-alumina grain or another aluminosilicate grain.

Cements suitable for use with refractory ceramic fibres may be prepared from a lithium silicate solution and a hydrous oxide, for instance a hydrous aluminium oxide together with a fine refractory oxide such as mullite, sillimanite, kyanite, or alpha-alumina. The hydrous oxide may be replaced by bentonite or by a natural or synthetic clay material. Desirably the solid material in the cement should be finer than a 7.2 mesh B.S.410, 1976 sieve, i.e. less than 212 microns.

A cement composition for use with refractory fibres may also include finely chopped refractory fibres as part of the solid material. Alumina or aluminosilicate ceramic refractory fibres are examples of suitable ceramic refractory fibres. Other suitable additives are the filaments and refractory fibres whose preparation is described in British Patent Specification No. 2,173,179A, also in European published Patent Application No. 0,197,686, also in British Patent Specification No. 2,184,430A.

Cements based on lithium silicate solutions may be used in the construction of the thermal insulating units and in the procedures described in British Patent Specification Nos. 1,548,866 and 1,548,867, also in U.S. Patents Nos. 4,194,036 and 4,324,602. Cements based on lithium silicate solutions may be used in the forming of hot faces of a furnace, also in spraying a ceramic fibre on to the face concerned. One procedure which is suitable is described in British Patent Specification No. 1,527,651, also in U.S. Patent No. 4,068,701. Here either or both solutions may contain a hydrous metal oxide in suspension, which can act as accelerator, or alternatively the accelerator solution is a dilute acid, the ceramic fibre being fed into the mixed solution stream.

Ceramic fibre modules suitable for use in the construction of furnaces may be prepared by spraying onto a metal grille a ceramic fibre bonded with lithium silicate. A spray gun suitable for spraying a chopped ceramic refractory fibre may be used. Chopped ceramic fibre is fed into the gun, where it is reduced in size and sprayed through the nozzle of the gun under water and air pressure. The necessary water is provided by the lithium silicate solution. The addition of a fine refractory oxide material or a fine hydrous oxide material is again advantageous. The preferred fine refractory oxide material is alpha alumina. Fine calcium silicate material and fine calcium aluminate material may also be used.

The preferred fine hydrous oxide material is boehmite. The chopped ceramic fibre should preferably have a mean average diameter of 3 - 4 microns.

The fibre length is preferably between 2 cm and 10 cm. However, a fibre longer than 10 cm may be used, as the fibre length is reduced in the gun. In a cement which is to be used for joining refractory fibres, the length of the ceramic fibres in this cement is preferably between 1 cm and 5 cm.

Suitable alpha alumina materials include the BACO MA95D grades. These are described in BACO Data Sheet 913 of January 1985. (BACO is a Registered Trade Mark). The maximum percentage of MA 95 D1, MA 95 D2 and MA 95 D3 materials retained on a 350 mesh BS 410, 1976 sieve (45 microns) is 0.5 % w/w. The median monocrystal diameter of these materials is 5 microns.

Another suitable alpha alumina material is the O 115 - 25 material of VAW (Vereinigte Aluminium-Werke AG). This material has the following properties.

Sieve analysis > 63 microns max 0.5%

| | |
|---|---|
| > 32 microns | 5% |
| < 20 microns | 85% |

Crystal diameter 2 → 1.3 microns

A suitable boehmite material is the K - REF G.C. Powder of Keith Refractories Ltd. This material has the following particle size distribution.

| | |
|---|---|
| Above 63 microns | 7 % |
| Passing 45 microns | 80% |
| Passing 25 microns | 60% |

For a general description of gunning procedures, see H.D.Leigh in "Kirk-Othmer Encyclopedia of Chemical Technology" 3rd Edn. Vol. 20 p.2. John Wiley & Sons New York, N.Y. 1982. The gunning procedure is described in British Patent Specification No. 1,527,651, also in United States Patent No. 4,068,701.

Ceramic fibre shapes may be made from a suspension of ceramic fibres (with one or more refractory metal oxides or hydrous metal oxides if desired) in a lithium silicate solution by vacuum forming techniques. This procedure may also be used with the filaments and fibres whose production is described in British Patent Specification No. 2,173,179A also in European Published Patent Application 0,197,686, also in British Patent Specification No. 2,184,430A.

The invention also includes the use of the double silicate of lithium and sodium to bind refractory material, which may be in the form of refractory grain or refractory ceramic fibre. The system $Li_2SiO_3$-$Na_2SiO_3$ shows the presence of the compound Li Na $SiO_3$. This compound melts incongruently at 847°C.

EXAMPLE I

This example describes the preparation of a module for use in furnace construction. The module is prepared using a spray gun suitable for spraying chopped refractory ceramic fibres.

A suitable refractory ceramic fibre is a chopped aluminosilicate fibre containing about 45% w/w alumina, having a mean average diameter of 3-4 microns. The fibre is further chopped in the gun to a size suitable for spraying and mixed in the gun with boehmite powder. (K-REF G.C. Powder) to give a composition in the range 1.5% - 10% by weight powder to fibre, the composition range 1.5% - 9% by weight being preferred. This composition range gives better bonding and avoids the formation of dust during spraying. Lithium silicate solution (crystal L 29 lithium silicate) is fed to the spray gun without further dilution, the proportion being adjusted to give a weight ratio solution to fibre within the range 0.8 : 1.0→1.0 : 1.0.

A metal grille is placed at the bottom of a hollow mould box of depth equal to the fibre thickness required. Usually this will be between 5 and 10 cm (between 2 and 4 inches). The cementitious mix of fibre, boehmite and lithium silicate solution is now gunned to a level slightly proud of the mould box to enable the surface to be lightly tamped to the required level. Gunning is performed on the surface held in the vertical plane; however downwards or upwards gunning can be used.

The module may be dried at 100°C for 24 hours prior to firing. This is desirable but not essential. A dry density between 96 - 192 $kgm^{-3}$ (6-12 lb.cu.ft.) is obtained, depending on the fineness of the fibre sprayed and the amount of boehmite added. On firing continuously for 100 hours at 1250°C no shrinkage was observed and on firing at 1300°C, shrinkage of the module was minimal.

It is advantageous to apply a thin coating of "cement composition No. 2" of British Patent Specification No. 1,548,866 to the metal grille before the gunning operation. Alternatively a thin coating of lithium silicate solution (crystal L 29 lithium silicate) may be sprayed on to the metal grille before the gunning operation.

EXAMPLE II

In the procedure of Example 1 the boehmite powder is replaced with alpha alumina powder, either 0 115 - 25 material of VAW or MA95D2 material, in the composition range 1.5 to 3% by weight powder to fibre, the composition 2% by weight powder to fibre being preferred for the 0 115 - 25 material. This composition gives less shrinkage when the module is fired at 1300°C.

EXAMPLE III

In the procedure of Example II, the aluminosilicate refractory ceramic fibre is replaced by an aluminosilicate refractory ceramic fibre reinforced with zirconia (fibre composition : - $Al_2O_3$ - 45% w/w; $ZrO_2$-10% w w; balance $SiO_2$ plus minor impurities, mean average diameter 3 - 4 microns). This improves the resistance to damage on thermal cycling of a module.

EXAMPLE IV

Repairs to furnace walls or rooves can be carried out by the refractory ceramic fibre gunning procedures described in Examples 1, 2 and 3. There is no need for thorough drying when fibre is gunned on to furnace walls or rooves. The composition range 1.5 to 3% by weight powder to fibre is preferred. It is frequently advantageous to spray lithium silicate solution (crystal L29 lithium silicate) on to the wall or roof of the furnace first, before applying refractory ceramic fibre using the gunning procedures described in Examples 1, 2 or 3.

It should be mentioned that lithium silicate may be used as a gellable material to bind refractory materials in a manner analogous to ethyl silicate.

Claims

1. A refractory cement comprising a gellable liquid, a refractory aggregate and or a hydrous metal oxide characterised in that the gellable liquid comprises an aqueous lithium silicate solution.

2. A refractory cement according to Claim 1 wherein the hydrous metal oxide is alumina.

3. A refractory cement according to Claim 1 or Claim 2 wherein the hydrous metal oxide has a grain size finer than 100 microns.

4. A refractory cement according to any preceding claim wherein the refractory aggregate is made of ceramic fibres.

5. A cement according to Claim 4 wherein the fibre has a mean average diameter of 3 - 4 microns.

6. A cement according to Claim 4 wherein the fibre length is between 2 cm and 10 cm.

7. A module for use in furnace construction comprising a backing member and sprayed on to that backing member a layer of a ceramic fibre based cement in accordanced with Claims 4 to 6.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | FR-A-2 381 812 (H.B. FULLER CO.) * Claim 14; page 3, lines 19-22; page 4, lines 24-27,36-38 * | 1-3 | C 04 B 12/04 C 04 B 35/68 C 04 B 28/26 |
| A | | 4,7 | F 27 D 1/00 // (C 04 B 28/26 |
| X | FR-A-1 480 964 (ENGLISH ELECTRIC CO.) * Claims 1,3,4 * | 1,4 | C 04 B 14:30 C 04 B 14:46 ) |
| X | GB-A- 608 594 (A.G.E.V.) * Page 1, lines 10-20; claims 1,3,5 * | 1,7 | |
| A | US-A-3 565 675 (R.H. SAMS) * Abstract; claims 1,4 * | 1 | |
| A | US-A-3 988 161 (Y. KANEKO et al.) * Abstract * | 1,2,4 | |
| A | US-A-3 508 940 (J.E. WEBB) * Column 2, lines 60-64; column 3, lines 3-5,45-54 * | 1,3-5 | |
| A | US-A-4 078 029 (A. YOSHIDA et al.) | | TECHNICAL FIELDS SEARCHED (Int. Cl.4) C 04 B 28/00 C 04 B 35/00 C 04 B 12/00 |

The present search report has been drawn up for all claims

| Place of search | Date of completion of the search | Examiner |
|---|---|---|
| THE HAGUE | 21-04-1988 | DAELEMAN P.C.A. |